# EUROPÄISCHE PATENTANMELDUNG

(11) **EP 4 372 892 A2**
(43) Veröffentlichungstag der Anmeldung: **22.05.2024**
(21) Anmeldenummer: 23179557.6
(22) Anmeldetag: 15.06.2023
(51) Int. Cl.: H01M 50/383

(54) **AUFNAHMEBEHÄLTER FÜR ELEKTRISCHE ENERGIESPEICHER**

(30) Priorität: 18.08.2022 AT 506382022
(71) Anmelder: Griengl, Hubert, 9020 Klagenfurt am Wörthersee (AT)
(72) Erfinder: Griengl, Hubert, 9020 Klagenfurt am Wörthersee (AT)
(74) Vertreter: Beer & Partner Patentanwälte KG

(57) **Zusammenfassung**

Ein Aufnahmebehälter (1) für wenigstens einen elektrischen Energiespeicher (11) weist einen Boden (3), Seitenwände (2), die einen Innenraum (4) begrenzen, eine zum Innenraum (4) führende, obere Öffnung (5) und einen Deckel (6) zum Verschließen der Öffnung (5), der in eine offene und eine geschlossene Position bewegbar ist, auf. Am Deckel (6) ist wenigstens eine Stütze (7) angeordnet. Im Bereich der Öffnung (5) und/oder im Innenraum (4) ist wenigstens ein Sicherheitselement (9) angeordnet, das durch Erhitzen auf eine definierte Zerstörungstemperatur und/oder durch Feuer zerstörbar ist. Der Deckel (6) stützt sich in seiner offenen Position mithilfe der Stütze (7) an dem unzerstörten Sicherheitselement (9) ab. Die Stütze (7) ist in der geschlossenen Position des Deckels (6) vom zerstörten Sicherheitselement (9) freigegeben.

## Beschreibung

Die Erfindung betrifft einen Aufnahmebehälter für elektrische Energiespeicher mit einem Boden und mit Seitenwänden, die einen Innenraum begrenzen, mit einer zum Innenraum führenden, oberen Öffnung und mit einem Deckel zum Verschließen der Öffnung, der in eine offene und eine geschlossene Position bewegbar ist.

Bekannterweise besteht bei herkömmlichen Akkumulatoren, insbesondere bei Lithium-Ionen Akkumulatoren, die Gefahr, dass sich diese aufgrund von Schäden im oder am Akkumulator entzünden oder sogar explodieren.

Am häufigsten entzünden sich (beschädigte) Akkumulatoren während des Ladevorgangs, wobei gerade in Betrieben eingesetzte Akkumulatoren, wie z.B. Werkzeugakkumulatoren, oftmals über Nacht geladen werden, um unter Tags einsatzbereit zu sein.

Entzündet sich ein Akkumulator oder explodiert dieser sogar, ohne dass schnellstmöglich brandbekämpfende Maßnahmen ergriffen werden, so kann dies zu einem verheerenden Brand an der Lagerstätte des Akkumulators, beispielsweise in einer Garage, einer Werkshalle oder einer Werkstatt, mit hohen finanziellen und im schlimmsten Fall sogar gesundheitlichen Schäden führen.

Der Erfindung liegt daher die Aufgabe zu Grunde, eine Vorrichtung der eingangs genannten Gattung zur Verfügung zu stellen, mit der das angesprochene Probleme so weit wie möglich vermieden werden kann. Insbesondere soll eine Vorrichtung bereitgestellt werden, mit der das Risiko eines sich ausbreitenden Brandes aufgrund eines während der Lagerung oder während des Ladens explodierenden oder sich selbst entzündenden Akkumulators minimiert oder sogar gänzlich ausgeschaltet wird. Gelöst wird diese Aufgabe erfindungsgemäß mit einem Aufnahmebehälter, der die Merkmale von Anspruch 1 aufweist. Bevorzugte und vorteilhafte Ausführungsformen der Erfindung sind Gegenstand der Unteransprüche.

Erfindungsgemäß ist vorgesehen, dass am Deckel wenigstens eine Stütze angeordnet ist, dass im Bereich der Öffnung und/oder im Innenraum wenigstens ein Sicherheitselement angeordnet ist, das durch Erhitzen auf eine definierte Zerstörungstemperatur und/oder durch Feuer zerstörbar ist, dass sich der Deckel in seiner offenen Position mithilfe der Stütze an dem unzerstörten Sicherheitselement abstützt, und dass die Stütze in der geschlossenen Position des Deckels vom zerstörten Sicherheitselement freigegeben ist.

Der erfindungsgemäße Aufnahmebehälter stellt eine besonders sichere Lagermöglichkeit zur Aufnahme bzw. Aufbewahrung von elektrischen Energiespeichern, wie Akkumulatoren, zur Verfügung.

Solange sich der Deckel in der offenen Position befindet, können elektrische Energiespeicher ungehindert in den Aufnahmebehälter gegeben werden, um diese sicher zu lagern oder aufzuladen, und aus dem Aufnahmebehälter entnommen werden.

Entzündet sich jedoch ein elektrischer Energiespeicher, während er im Aufnahmebehälter gelagert oder geladen wird, erhöht sich die Temperatur im Innenraum schlagartig, wodurch das Sicherheitselement bis zur definierten Zerstörungstemperatur erhitzt und/oder verbrannt wird. Durch Erreichen bzw. Überschreiten der definierten Zerstörungstemperatur (die niedriger ist, als die Temperatur bei der der Deckel, die Seitenwände oder der Boden des Aufnahmebehälters zerstört wird) oder durch Verbrennen wird das Sicherheitselement - zumindest lokal - derart zerstört (d.h. es reißt, bricht, verbiegt sich, etc.), dass die Stütze nicht mehr darauf aufliegen (bzw. sich daran abstützen) kann und freigegeben wird. Aufgrund des Eigengewichtes des Deckels und/oder ggf. einer zusätzlich auf den Deckel wirkenden Federkraft schwenkt dieser nach unten in die geschlossene Position. In der geschlossenen Position ist die Stütze in den Innenraum des Aufnahmebehälters verschoben und die Öffnung verschlossen.

Sobald sich der Deckel in der geschlossenen Position befindet, kann keine Hitze aus dem Aufnahmebehälter entweichen bzw. können keine Flammen aus dem Aufnahmebehälter schlagen und Material in der Umgebung entzünden. Der brennende Energiespeicher ist somit im verschlossenen Aufnahmebehälter sicher verwahrt.

Daher ist der Deckel des Aufnahmebehälters zwischen einer offenen und einer geschlossenen Position insbesondere verschwenkbar. Das Verschwenken erfolgt dabei im Wesentlichen automatisch, sobald das Sicherheitselement zerstört ist. Wenn der Deckel in der offenen Position 90° oder mehr von der Öffnung weg geschwenkt ist, kann insbesondere eine Feder vorgesehen sein, die zuerst alleine und anschließend zusammen mit dem Eigengewicht des Deckels dafür sorgt, dass sich dieser in die geschlossene Position bewegt, insbesondere verschwenkt. Die Feder kann auch dazu dienen, den Deckel in der geschlossenen Position fest gegen den Rand der Öffnung zu drücken.

Vorzugsweise verschließt der Deckel in der geschlossenen Position den Aufnahmebehälter luftdicht, sodass ein Brand im Innenraum des Aufnahmebehälters eingedämmt bzw. erstickt wird.

Im Rahmen der Erfindung kann das Sicherheitselement wenigstens einen unzerstörbaren Abschnitt, an dem sich vorzugsweise die Stütze abstützt, und wenigstens einen zerstörbaren Abschnitt aufweisen. Als unzerstörbarer Abschnitt wird ein Abschnitt aus einem Material angesehen, das hohe Temperaturen aushält bzw. weitestgehend feuerfest ist. Bei einem derartigen Sicherheitselement muss nach einer Hitzeentwicklung bzw. einem Brand im Aufnahmebehälter nur der zerstörte Teil des Sicherheitselementes ersetzt werden, um die Funktion des Aufnahmebehälters wiederherzustellen.

Insbesondere ist im Rahmen der Erfindung eine Ausführungsform bevorzugt, bei der das Sicherheitselement ein Band ist, das vorzugsweise quer durch den Innenraum oder über die Öffnung verläuft. Ein Band bietet eine große Auflagefläche für die Stütze und eine große Angriffsfläche für Hitze und Feuer, sodass auch eine lokal begrenzte Hitzeentwicklung bzw. ein kleiner Brand im Aufnahmebehälter (z.B. ein Brand nur an einer Seite oder in einer Ecke) zur Erhitzung und Zerstörung des Sicherheitselementes führt. Das Sicherheitselement kann jedoch auch eine Schnur, ein Draht, eine Stange, eine Leiste, usw. aus bei einer definierten Temperatur schmelzbarem oder brennbarem Material sein.

Vorzugsweise ist die Stütze schwenkbar am Deckel, insbesondere an seiner Unterseite, angeordnet. Durch ein geringfügiges Anheben des Deckels aus der offenen Position wird die Stütze vom Sicherheitselement abgehoben, sodass sie manuell verschwenkt werden kann. Der Deckel kann dadurch trotz intaktem Sicherheitselement zugeklappt werden. Somit kann die Öffnung des Aufnahmebehälters auch mit intaktem Sicherheitselement verschlossen werden, um die darin gelagerten elektrischen Energiespeicher brandsicher und staubsicher zu verwahren. Dieses Verschwenken der Stütze kann auch durch eine Feder bewirkt oder unterstützt werden.

Bevorzugt ist es, wenn für die Stütze im Innenraum eine Führung angeordnet ist, die ein Verschwenken der Stütze begrenzt. Die Führung stellt somit sicher, dass die Stütze nicht unbeabsichtigt verschwenkt und vom Sicherheitselement abrutscht und der Deckel dann unbeabsichtigt zufällt. Zum Verschließen des Deckels bei intaktem Sicherheitselement kann der Deckel noch etwas weiter geöffnet und die Stütze nach oben aus der Führung herausgehoben werden. Die Führung kann beispielsweise ein Metallbügel sein, der an einer Seitenwand des Aufnahmebehälters, das Sicherheitselement seitlich umschließend, montiert ist und durch den ein Verschieben der Stütze in Richtung Innenraum möglich, ein nennenswertes Verschwenken der Stütze jedoch blockiert ist.

Vorzugsweise verläuft das Sicherheitselement im Wesentlichen parallel zu einer Schwenkachse des Deckels, wobei dies insbesondere auf Ausführungsformen des Aufnahmebehälters zutrifft, bei denen der Aufnahmebehälter eine ebenfalls parallel zur Schwenkachse verlaufende Längserstreckung aufweist. Somit kann das Sicherheitselement mehrere nebeneinander im Aufnahmebehälter angeordnete elektrische Energiespeicher überspannen.

Im Rahmen der Erfindung sind insbesondere Ausführungsformen bevorzugt, bei denen am Deckel wenigstens zwei Stützen angeordnet sind, die in der offenen Position am unzerstörten Sicherheitselement im Bereich gegenüberliegender Seitenwände aufliegen, und die in der geschlossenen Position vom zerstörten Sicherheitselement freigegeben sind. Alle bisher beschriebenen und alle noch folgenden Merkmale lassen sich in adäquater Weise auf Ausführungsformen des Aufnahmebehälters mit zwei Stützen umlegen.

In einer bevorzugten Ausführungsform des Aufnahmebehälters ist/sind im Innenraum ein Ladeanschluss oder mehrere Ladeanschlüsse zum Aufladen elektrischer Energiespeicher angeordnet. Da die Gefahr der Selbstentzündung bei elektrischen Energiespeichern insbesondere während des Auf- bzw. Entladens am größten ist, stellt der erfindungsgemäße Aufnahmebehälter eine sichere Möglichkeit dar, elektrische Energiespeicher (auch unbeaufsichtigt) zu laden. Bei mehreren Ladeanschlüssen sind diese vorzugsweise in Richtung der Längserstreckung des Aufnahmebehälters nebeneinander angeordnet. Der elektrische Energiespeicher bzw. die Energiespeicher kann/können über einen oder mehrere Kontakte oder kontaktlos, z.B. über Induktion, mit dem korrespondierenden Ladeanschluss verbindbar sein. Als Ladeanschluss wird eine mechanische Anschlussstelle ("Stecker-Verbindung"), aber auch ganz allgemein eine Position, an der ein Energiespeicher (z.B. kontaktlos) aufgeladen werden kann, angesehen.

Die Ladeelektronik (d.h. das oder die Ladegeräte) kann im Innenraum, in einer Seitenwand, im Boden, in einer eigenen Kammer des Aufnahmebehälters oder aber auch außerhalb des Aufnahmebehälters angeordnet sein. Beispielsweise können Ladegeräte außerhalb des Aufnahmebehälters und im Innenraum die galvanischen Kontakte für die Akkus angeordnet sein. Ebenso kann vorgesehene sein, dass die Energiespeicher im Innenraum kontaktlos, z.B. über Induktion, mittels außerhalb des Innenraums positionierter Ladegeräte aufladbar sind.

Vorzugsweise verläuft das Sicherheitselement derart, dass zum Aufladen angeschlossene Energiespeicher darunter angeordnet bzw. positioniert sind. D.h. das Sicherheitselement verläuft - im Wesentlichen quer - über den/die zum Aufladen angeschlossenen elektrischen Energiespeicher. Bei einem bandförmigen Sicherheitselement, das quer durch den Innenraum bzw. über die Öffnung von einer Seitenwand zu einer gegenüberliegenden Seitenwand des Aufnahmebehälters verläuft, sind die Anschlüsse vorzugsweise auch in einer parallel zum Sicherheitselement verlaufenden Flucht angeordnet. Dadurch, dass das Sicherheitselement über allen zum Laden im Aufnahmebehälter positionierten Energiespeichern angeordnet ist, ist gewährleistet, dass das Sicherheitselement beim Entzünden jedes einzelnen Energiespeichers zerstört wird.

Besonders bevorzugt ist es, wenn die Seitenwände und/oder der Deckel aus einem brandhemmenden Material bestehen. Beispielsweise kann diese Material Metall, z.B. Stahl oder Aluminium, sein. Zusätzlich dazu oder stattdessen kann innen an den Seitenwänden und/oder am Deckel eine brandhemmende Schicht angeordnet sein. Die brandhemmende Schicht kann angeklebt, angeschraubt, angenietet, oder anderwärtig befestigt sein. Ebenso ist es möglich, die brandhemmende Schicht mit Glasfasergewebe, Karbongewebe oder einem anderen brandhemmenden (insbesondere bis zu 900° hitzebeständigen) Gewebe zu ummanteln bzw. nach innen hin abzudecken bzw. dass die brandhemmende Schicht wenigstens eine Lage aus einem derartigen Gewebe aufweist. Die brandhemmende Schicht kann zusätzlich oder stattdessen Blähglasplatten oder Blähglasgranulat aufweisen. Die brandhemmende Schicht stellt sicher, dass der Aufnahmebehälter nicht zu brennen beginnt, wenn ein darin eingeschlossener Energiespeicher Feuer fängt.

In einer speziellen Ausführungsform kann auf dem Boden des Aufnahmebehälters im Innenraum eine brandhemmende Granulatschicht, vorzugsweise aus Blähglasgranulat, angeordnet sein. Die Granulatschicht ist mit einer Trennschicht, insbesondere einer Kunststofffolie, ummantelt oder abgedeckt. Die Trennschicht ist zerstörbar, indem sie zumindest lokal auf die definierte Zerstörungstemperatur erhitzt oder verbrannt wird. Somit liegt ein im Innenraum (z.B. zum Aufladen) angeordneter Energiespeicher vorerst auf der Trennschicht auf, sinkt jedoch in das unter der Trennschicht angeordnete Blähglasgranulat ein, sobald die Trennschicht auf die Zerstörungstemperatur erhitzt bzw. verbrannt und zerstört wird. Diese Maßnahme bietet einen zusätzlichen Brandschutz.

Im Rahmen der Erfindung ist insbesondere vorgesehen, dass das Sicherheitselement aus einem Material oder Materialgemisch besteht, bei dem die definierte Zerstörungstemperatur >= 50°C, vorzugsweise >= 75°C, insbesondere >= 100°C, beträgt. Weiters ist bevorzugt, dass die definierte Zerstörungstemperatur <= 600°C, vorzugsweise <= 450°C, insbesondere <= 300°C beträgt. Dies soll sicherstellen, dass das Sicherheitselement nicht bereits zerstört wird, wenn sich der Energiespeicher lediglich erwärmt, es jedoch jedenfalls zerstört wird, bevor der restliche Aufnahmebehälter bzw. die Umgebung des Aufnahmebehälters Feuer fangen kann. Das Sicherheitselement kann daher aus einem leicht entzündlichen oder bei niedriger Temperatur schmelzenden bzw. verkohlenden Material bestehen.

Besonders bevorzugt weist der Deckel wenigstens ein Verschlusselement auf, das in der geschlossenen Position automatisch, insbesondere an bzw. in einem Gegenelement an einer der Seitenwände, einrastet und den Deckel geschlossen hält. Beispielsweise kann am Deckel wenigstens eine Lasche oder ein Ring mit einer Durchgangsöffnung angeordnet sein, das/der in der offenen Position nach oben verschwenkt ist. Durch das Anschlagen des Deckels an der Öffnung in der geschlossenen Position klappt die Lasche/der Ring nach vorne herunter, wobei die Durchgangsöffnung einen außen am Aufnahmebehälter wegragenden Zapfen oder Vorsprung umschließt. Die Lasche oder der Ring kann in der offenen Position des Deckels auch unverschwenkt sein, und beim Herunterklappen über den Zapfen bzw. Vorsprung gleiten. Das Umschließen des Zapfens bzw. Vorsprunges durch die Lasche bzw. den Ring ist ein Einrasten im Sinne der Erfindung. Der Deckel kann bei eingerastetem Verschlusselement nur noch durch manuelles Öffnen des Verschlusselementes geöffnet werden, nicht jedoch, wenn sich im Innenraum des Aufnahmebehälters ein Überdruck aufbaut.

Das Verschlusselement kann auch ein profilierter Vorsprung, der in einem Schloss am Aufnahmebehälter einrastet, oder ein anderer geeigneter, insbesondere formschlüssiger, Mechanismus sein. Eine magnetische Sicherung zum Festhalten der eingerasteten Laschen/Ringe ist ebenfalls möglich.

In wenigstens einer der Seitenwände und/oder dem Deckel kann wenigstens eine den Innenraum mit der Umgebung verbindende Druckausgleichseinrichtung, über die ein Überdruck im Innenraum an die Umgebung abgegeben werden kann, angeordnet sein. Die Druckausgleichseinrichtung wird beispielsweise durch wenigstens ein Druckableitungsrohr, ein Überdruckventil, oder eine Brandklappe gebildet. Die Druckausgleicheinrichtung kann auch durch eine oder mehrere Öffnung/en (insbesondere Rundöffnung/en) gebildet sein, die mit einer Brandschutzmatte (insbesondere Karbonfasermatte) mit oder ohne Gitter ausgekleidet bzw. abgedeckt ist/sind. Bei Ausführungsformen mit einer innen angeordneten, brandhemmenden Schicht ist diese im Bereich der Rundöffnung/en nicht angeordnet, sodass im Innenraum gebildetes Gas durch die Brandschutzmatte aus der/den Rundöffnung/en entweichen kann. Insbesondere erlaubt die Druckausgleichseinrichtung das Entweichen von Gas aus dem Aufnahmebehälter, verhindert jedoch gleichzeitig das Eindringen von Gas und das Herausschlagen von Flammen.

In einer Weiterentwicklung der Erfindung kann an einer zum Innenraum weisenden Unterseite des Deckels eine Löschdecke aus einem brandhemmenden Material angeordnet sein, die von wenigstens einem Halteelement am Deckel gehalten ist. Das Halteelement ist durch Erhitzen auf die definierte Zerstörungstemperatur und/oder durch Feuer zerstörbar, wodurch die Löschdecke in den Innenraum fällt. Das Halteelement kann beispielsweise ein Band, ein Kleber, eine Schnur oder eine Naht sein, das/der/die durch Hitze oder Feuer zerstörbar ist. Die Löschdecke kann beispielsweise aus einer Glasfasermatte, einer Karbonfasermatte oder einem anderen, vorzugsweise bis mindestens 900 °C hitzebeständigen, Gewebe bestehen. Sobald das Halteelement zerstört ist, fällt die Löschdecke von oben auf den/die Energiespeicher und hilft damit, eine Ausbreitung des Brandes zu unterbinden bzw. das Feuer im Innenraum zu ersticken. Weitere Einzelheiten, Merkmale und Vorteile der Erfindung ergeben sich aus der nachstehenden Beschreibung unter Bezugnahme auf die angeschlossenen Zeichnungen, in welchen bevorzugte Ausführungsformen dargestellt sind. Es zeigt:
- Fig. 1: eine isometrische Ansicht eines erfindungsgemäßen Aufnahmebehälters mit geöffnetem Deckel,
- Fig. 2: eine isometrische Ansicht des erfindungsgemäßen Aufnahmebehälters mit geschlossenem Deckel,
- Fig. 3: eine Detailansicht einer Auflagestelle zwischen einer Stütze und einem Sicherheitselement in einem seitlichen Schnitt entlang einer in Längsrichtung durch das Sicherheitselement verlaufenden Schnittebene, und
- Fig. 4: eine Schnittansicht des erfindungsgemäßen Aufnahmebehälters mit geschlossenem Deckel gemäß einer weiteren Ausführungsform.

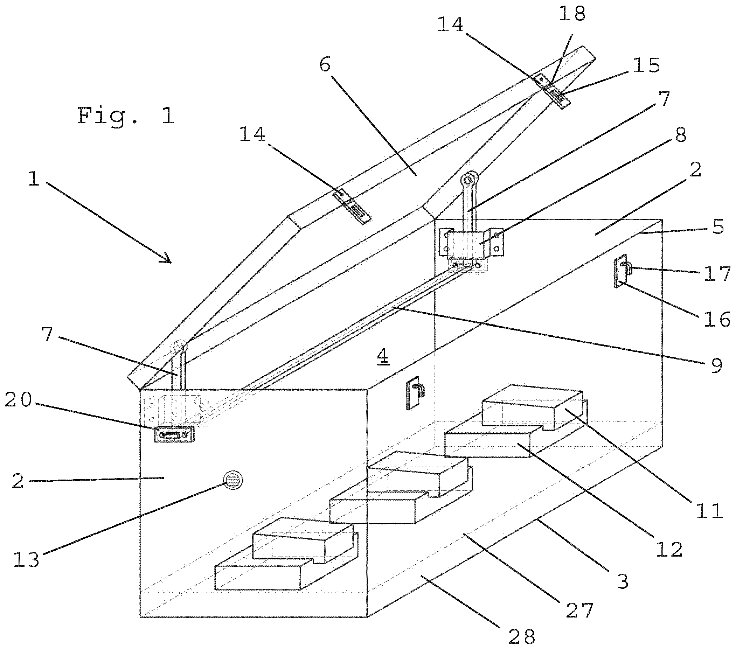

Fig. 1 zeigt einen erfindungsgemäßen Aufnahmebehälter 1 in isometrischer Ansicht.

Der Aufnahmebehälter 1 weist Seitenwände 2 und einen Boden 3 auf, die einen Innenraum 4 seitlich und nach unten hin begrenzen. Von oben her ist der Innenraum 4 über eine obere Öffnung 5 zugänglich, wobei die Öffnung 5 mit einem verschwenkbar am Aufnahmebehälter 1 angeordneten Deckel 6 verschließbar ist. In Fig. 1 ist der Deckel 6 in einer offenen Position dargestellt, in der er in einem spitzen Winkel von der Öffnung 5 weg verschwenkt ist.

Am Deckel 6 ist wenigstens eine verschwenkbare Stütze 7 angeordnet, die zum Innenraum 4 hin - und in der dargestellten Ausführungsform (wenn sich der Deckel 6 in der offenen Position befindet) - ein Stück in den Innenraum 4 hinein ragt.

Vorzugsweise sind jedoch (wie dargestellt) wenigstens zwei derartige Stützen 7 vorgesehen, die im Bereich gegenüberliegender Seitenwände 2 angeordnet und jeweils von oben her durch eine an der jeweiligen Seitenwand 2 angeordnete, bügelförmige Führung 8 geführt sind.

Die Führungen 8 weisen im Wesentlichen eine U-Form bzw. eine Ω-Form auf, wobei ihre offene Seite jeweils an der Seitenwand 2 angeordnet ist, sodass ein Verschwenken der Stützen 7 nach vorne und nach hinten begrenzt ist.

Quer durch den Innenraum 4 ist ein bandförmiges Sicherheitselement 9 gespannt. Das als Band ausgeführte Sicherheitselement 9 verläuft im Wesentlichen parallel zu einer Schwenkachse des Deckels 6 und in Richtung einer Längserstreckung des Aufnahmebehälters 1.

Das Sicherheitselement 9 ist in Fig. 1 in unzerstörtem Zustand dargestellt, in dem die Stützen 7 jeweils von oben auf dem Sicherheitselement 9 aufliegen, wodurch ein Verschieben der Stützen 7 weiter in den Innenraum 4 hinein blockiert ist.

In Fig. 1 ist der erfindungsgemäße Aufnahmebehälter 1 mit darin gelagerten, vereinfacht (und in durchgehenden Linien) dargestellten, elektrischen Energiespeichern 11, beispielsweise Akkumulatoren für Akku-Schrauber, zu sehen. Da mehrere Energiespeicher 11 im Innenraum 4 gelagert bzw. geladen werden, sind diese in Längserstreckung des Aufnahmebehälters 1 nebeneinander angeordnet, ebenso wie die entsprechenden Ladeanschlüsse 12.

Die Ladeanschlüsse 12 sind derart angeordnet, dass das quer durch den Innenraum 4 verlaufende Sicherheitselement 9 alle Energiespeicher 11 im Wesentlichen überspannt.

In einer Seitenwand 2 des Aufnahmebehälters 1 ist eine Druckausgleichseinrichtung 13 (z.B. ein Überdruckventil) vorgesehen, durch die Gas (z.B. Explosionsgas) aus dem Innenraum 4 in die Umgebung entweichen, jedoch kein Gas aus der Umgebung in den Innenraum 4 eindringen kann. Die Druckausgleichseinrichtung 13 kann stattdessen oder zusätzlich dazu auch im Deckel 6 oder einer der anderen Seitenwände 2 vorgesehen sein.

Die in Fig. 1 dargestellten Energiespeicher 11 können (z.B. durch Selbstentzündung beim Aufladen) in Brand geraten. Durch einen brennenden Energiespeicher 11 wird das Sicherheitselement 9 im darüber liegenden Bereich immer weiter erhitzt bzw. die Temperatur des Sicherheitselementes 9 zumindest lokal immer mehr erhöht, bis das Sicherheitselement 9 zumindest lokal schmilzt, verbrennt, reißt oder auf andere Art und Weise zerstört wird.

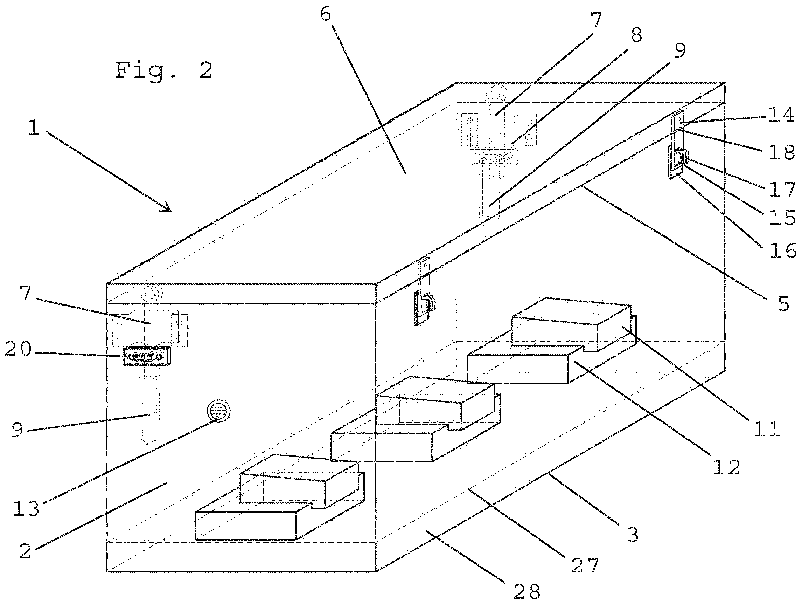

In Fig. 2 ist das Sicherheitselement 9 in zerstörtem Zustand dargestellt, d.h. es ist gerissen, da es zumindest lokal bis zur Zerstörungstemperatur erhitzt wurde bzw. verbrannt ist. Die Stützen 7 sind durch die Zerstörung des Sicherheitselementes 9 freigegeben und in den Innenraum 4 verschoben. Der Deckel 6 befindet sich dementsprechend in einer geschlossenen Position, in der er zur Öffnung 5 verschwenkt ist und diese verschließt.

Die Bewegung von der offenen Position in die geschlossene Position des Deckels 6 findet automatisch statt, sobald das Sicherheitselement 9 zerstört ist, da der Deckel 6 aufgrund seines Eigengewichtes, d.h. aufgrund der auf den Deckel 6 wirkenden Schwerkraft, zur Öffnung 5 hin verschwenkt wird, sobald die Stützen 7 freigegeben sind, d.h. nicht mehr am Sicherheitselement 9 aufliegen. Zur Unterstützung der Verschwenkbewegung des Deckels 6 kann, z.B. an einem Schwenkgelenk des Deckels 6, eine nicht im Detail dargestellte Feder vorgesehen sein.

Am Deckel 6 sind zwei Verschlusselemente 14 angeordnet, die in der dargestellten Ausführungsform verschwenkbare Laschen mit schlitzförmigen Öffnungen 15 sind. Beim Herunterklappen des Deckels 6 von der offenen Position in die geschlossene Position treffen die Verschlusselemente 14 auf Gegenelemente 16 mit nach unten gebogenen Haken 17. Die Verschlusselemente 14 gleiten über die Haken 17 der Gegenelemente 15, sodass sie zuerst nach außen schwenken (bzw. elastisch verbogen werden, was im Sinne der Erfindung auch als Verschwenken angesehen wird) und anschließend zurück zur Vorderwand des Aufnahmebehälters 1 schwenken, sobald die Haken 17 in die Öffnungen 15 eingreifen. Dies wird im Rahmen der Erfindung ebenfalls als Einrasten der Verschlusselemente 14 angesehen. Bei eingerasteten Verschlusselementen 14 wird der Deckel 6 in der geschlossenen Position gehalten und öffnet sich auch nicht durch einen im Innenraum 4 entstehenden Überdruck (z.B. durch eine Explosion), da die Haken 17 die Verschlusselemente 14 zurückhalten und ein Öffnen des Deckels 6 verhindern. Durch manuelles Verschwenken der Verschlusselemente 14 kann der Deckel 6 wieder geöffnet werden.

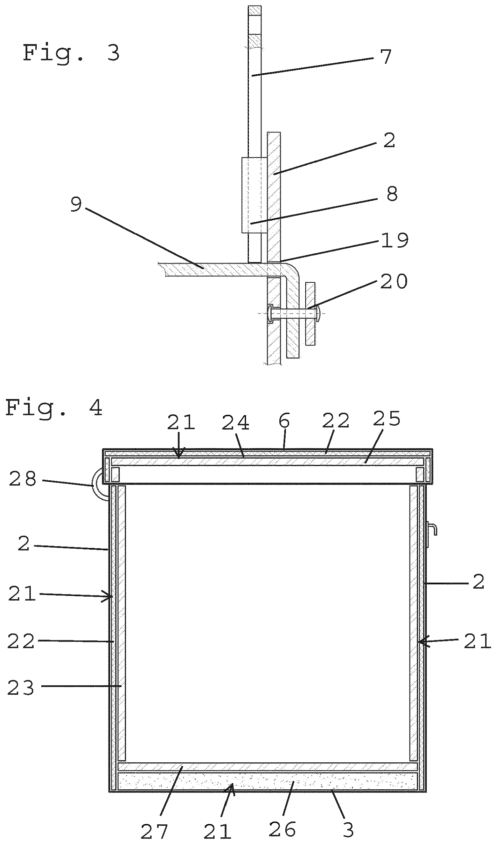

Fig. 3 zeigt eine Detailansicht einer auf dem unzerstörten Sicherheitselement 9 aufliegenden Stütze 7. Die Detailansicht von Fig. 3 ist eine seitliche Schnittansicht entlang einer in Längsrichtung durch das Sicherheitselement 9 verlaufenden Schnittebene.

Die Stütze 7 ist an ihrem oberen Ende mit einer Schwenkverbindung 18 am in Fig. 3 nicht dargestellten Deckel 6 und im Bereich einer der Seitenwände 2 angeordnet. Durch die Führung 8 an der Seitenwand 2 wird die Stütze 7 in ihrer Position über bzw. auf dem Sicherheitselement 9 gehalten.

Die Stütze 7 liegt mit einem unteren freien Ende auf dem Sicherheitselement 9 auf, das in Fig. 3 in einem intakten, d.h. unzerstörten, Zustand dargestellt ist und daher die Bewegung der Stütze 7 nach unten bzw. in den Innenraum 4 blockiert.

In der in Fig. 3 dargestellten Ausführungsform ist das bandförmige Sicherheitselement 9 seitlich durch einen Schlitz 19 in der Seitenwand 2 geführt, nach unten umgelenkt und an der Seitenwand 2 mittels eines an der Seitenwand 2 montierten (z.B. vernieteten oder verschraubten) Haltemittels 20, z.B. einem Blechstreifen, festgeklemmt und fixiert. Das Haltemittel 20 kann näher an der Seitenwand 2 angeordnet sein, sodass das Sicherheitselement 9 zusätzlich zwischen der Seitenwand 2 und dem Haltemittel 20 eingeklemmt ist.

Fig. 4 zeigt einen Schnitt durch den erfindungsgemäßen Aufnahmebehälter 1 gemäß einer weiteren Ausführungsform mit dem Deckel 6 in der geschlossenen Position. Der Schnitt verläuft entlang einer zum Sicherheitselement 9 orthogonalen Schnittebene.

Bei dem in Fig. 4 dargestellten Aufnahmebehälter 1 ist innen an den Seitenwänden 2, dem Deckel 6 und dem Boden 3 jeweils eine brandhemmende Schicht 21 angeordnet.

An den Seitenwänden 2 besteht die brandhemmende Schicht 21 aus einer direkt an der jeweiligen Seitenwand 2 angeordneten Brandschutzmatte 22, z.B. einer Kohle- oder Glasfasermatte, und einer Innenverkleidung aus Blähglasplatten 23.

Auch der Deckel 6 ist innen mit einer Brandschutzmatte 22 verkleidet, an der eine Löschdecke 24 angeordnet ist. Die Löschdecke 24 ist mit einem Halteelement 25 am Deckel 6 bzw. an der Brandschutzmatte 22 montiert. Bei Hitze- oder Feuereinwirkung wird das Haltelement 25 zumindest soweit zerstört, dass die Löschdecke 24 freigegeben wird und nach unten

(auf die in Fig. 4 nicht dargestellten, im Einsatz jedoch darunter angeordneten Energiespeicher 11) fällt.

In der dargestellten Ausführungsform ist das Halteelement 25 eine zwischen Löschdecke 24 und Brandschutzmatte 22 eingebrachte Klebmasse. Das Haltelement 25 kann aber auch ein Faden, Band, Netz, etc. sein, der/das die Löschdecke 24 festhält.

Am Boden 3 ist eine Schicht Blähglasgranulat 26 angeordnet, die von einer Trennschicht 27 überspannt bzw. abgedeckt wird. Bei Hitze- oder Feuereinwirkung wird die Trennschicht 27 zumindest lokal zerstört, sodass ein darauf liegender Energiespeicher 11 in das Blähglasgranulat 26 einsinken kann.

Der Aufnahmebehälter 1 gemäß Fig. 4 weist im Bereich der Schwenkachse des Deckels 6 wenigstens ein Federelement 28 auf, das den Deckel 6 in die geschlossene Position drückt.

Die brandhemmende Schicht 21 kann angeklebt, angenietet, angeschraubt, oder auch anders an den Seitenwänden 2 bzw. dem Deckel 6 und/oder dem Boden 3 befestigt sein.

### Bezugszeichenliste

- 1: Aufnahmebehälter
- 2: Seitenwand
- 3: Boden
- 4: Innenraum
- 5: Öffnung
- 6: Deckel
- 7: Stütze
- 8: Führung
- 9: Sicherheitselement
- 10: ---
- 11: Elektrischer Energiespeicher
- 12: Ladeanschluss
- 13: Druckausgleichsöffnung
- 14: Verschlusselement
- 15: Durchgangsöffnung
- 16: Gegenelement
- 17: Haken
- 18: Schwenkverbindung
- 19: Schlitz
- 20: Haltemittel
- 21: brandhemmende Schicht
- 22: Brandschutzmatte
- 23: Blähglasplatte
- 24: Löschdecke
- 25: Halteelement
- 26: Blähglasgranulat
- 27: Trennschicht
- 28: Federelement

## Patentansprüche

1. Aufnahmebehälter (1) für wenigstens einen elektrischen Energiespeicher (11) mit einem Boden (3) und mit Seitenwänden (2), die einen Innenraum (4) begrenzen, mit einer zum Innenraum (4) führenden oberen Öffnung (5), und mit einem Deckel (6) zum Verschließen der Öffnung (5), der in eine offene und eine geschlossene Position bewegbar ist, **dadurch gekennzeichnet, dass** am Deckel (6) wenigstens eine Stütze (7) angeordnet ist, dass im Bereich der Öffnung (5) und/oder im Innenraum (4) wenigstens ein Sicherheitselement (9) angeordnet ist, das durch Erhitzen auf eine definierte Zerstörungstemperatur und/oder durch Feuer zerstörbar ist, und das vorzugsweise im Wesentlichen parallel zu einer Schwenkachse des Deckels (6) verläuft, dass sich der Deckel (6) in seiner offenen Position mithilfe der Stütze (7) an dem unzerstörten Sicherheitselement (9) abstützt, und dass die Stütze (7) in der geschlossenen Position des Deckels (6) vom zerstörten Sicherheitselement (9) freigegeben ist.

2. Aufnahmebehälter nach Anspruch 1, **dadurch gekennzeichnet, dass** das Sicherheitselement (9) wenigstens einen durch Erhitzen auf die definierte Zerstörungstemperatur und/oder durch Feuer nicht zerstörbaren Abschnitt, an dem sich vorzugsweise die Stütze (7) abstützt, und wenigstens einen zerstörbaren Abschnitt aufweist.

3. Aufnahmebehälter nach Anspruch 1 oder 2, **dadurch gekennzeichnet, dass** das Sicherheitselement (9) ein Band oder eine Schnur ist, das/die vorzugsweise quer durch den Innenraum (4) oder über die Öffnung (5) verläuft.

4. Aufnahmebehälter nach einem der Ansprüche 1 bis 3, **dadurch gekennzeichnet, dass** in der geschlossenen Position die Öffnung (5) durch den Deckel (6) im Wesentlichen luftdicht verschlossen ist.

5. Aufnahmebehälter nach einem der Ansprüche 1 bis 4, **dadurch gekennzeichnet, dass** die Stütze (7) schwenkbar am Deckel (6), insbesondere an einer Unterseite des Deckels (6), angeordnet ist, und dass gegebenenfalls im Innenraum (4) wenigstens eine Führung (8) für die Stütze (7) angeordnet ist, die ein seitliches Verschwenken der Stütze (7) begrenzt.

6. Aufnahmebehälter nach Anspruch 5, **dadurch gekennzeichnet, dass** am Deckel (6) wenigstens zwei Stützen (7) angeordnet sind, dass die Stützen (7) in der offenen Position des Deckels (6), am unzerstörten Sicherheitselement (9) im Bereich gegenüberliegender Seitenwände (2) aufliegen, und dass in der geschlossenen Position die Stützen vom zerstörten Sicherheitselement (9) freigegeben sind.

7. Aufnahmebehälter nach einem der Ansprüche 1 bis 6, **dadurch gekennzeichnet, dass** im Innenraum (4) ein Ladeanschluss (12) oder mehrere Ladeanschlüsse (12) zum Aufladen elektrischer Energiespeicher (11) angeordnet ist/sind.

8. Aufnahmebehälter nach Anspruch 7, **dadurch gekennzeichnet, dass** das Sicherheitselement (9) derart verläuft, dass zum Aufladen angeschlossene Energiespeicher (11) darunter angeordnet sind.

9. Aufnahmebehälter nach Anspruch 7 oder 8, **dadurch gekennzeichnet, dass** wenigstens eine Ladeelektronik für den Ladeanschluss (12) bzw. ggf. die Ladeanschlüsse (12) im Innenraum (4), in wenigstens einer Seitenwand (2) oder dem Boden (3) oder außerhalb der Seitenwände (2) angeordnet ist.

10. Aufnahmebehälter nach einem der Ansprüche 1 bis 9, **dadurch gekennzeichnet, dass** die Seitenwände (2) und/oder der Deckel (6) aus einem brandhemmenden Material bestehen, und/oder dass innen an den Seitenwänden (2) und/oder dem Deckel (6) eine brandhemmende Schicht (21) angeordnet ist, die vorzugsweise Blähglasplatten (23) oder Blähglasgranulat (26) aufweist.

11. Aufnahmebehälter nach einem der Ansprüche 1 bis 10, **dadurch gekennzeichnet, dass** auf dem Boden (3) des Aufnahmebehälters (1) im Innenraum (4) eine brandhemmende Granulatschicht, insbesondere aus Blähglasgranulat (26), angeordnet ist, wobei die Granulatschicht mit einer Trennschicht (27), insbesondere einer Kunststofffolie ummantelt oder abgedeckt ist, und dass die Trennschicht (27) beim Erhitzen auf die definierte Zerstörungstemperatur oder durch Feuer zerstörbar ist.

12. Aufnahmebehälter nach einem der Ansprüche 1 bis 11, **dadurch gekennzeichnet, dass** das Sicherheitselement (9) aus einem Material oder Materialgemisch besteht, bei dem die definierte Zerstörungstemperatur >= 50°C, vorzugsweise >= 75°C, insbesondere >= 100°C, beträgt, und/oder dass das Sicherheitselement (9) aus einem Material oder Materialgemisch besteht, bei dem die definierte Zerstörungstemperatur <= 600°C, vorzugsweise <= 450°C, insbesondere <= 300°C beträgt.

13. Aufnahmebehälter nach einem der Ansprüche 1 bis 12, **dadurch gekennzeichnet, dass** der Deckel (6) wenigstens ein Verschlusselement (14) aufweist, das in der Verschlussposition automatisch, insbesondere an bzw. in einem Gegenelement (16), das vorzugsweise an einer der Seitenwände (2) angeordnet ist, einrastet und den Deckel (6) geschlossen hält.

14. Aufnahmebehälter nach einem der Ansprüche 1 bis 13, **dadurch gekennzeichnet, dass** in wenigstens einer der Seitenwände (2) und/oder dem Deckel (6) eine den Innenraum (4) mit der Umgebung verbindende Druckausgleichseinrichtung (13), über die ein Überdruck im Innenraum (4) an die Umgebung abgebbar ist, wie beispielsweise wenigstens ein Druckableitungsrohr, ein Überdruckventil, eine Brandklappe oder eine mit einer Brandschutzmatte verdeckte Rundöffnung, angeordnet ist.

15. Aufnahmebehälter nach einem der Ansprüche 1 bis 14, **dadurch gekennzeichnet, dass** an einer zum Innenraum (4) weisenden Unterseite des Deckels (6) eine Löschdecke (24) aus einem brandhemmenden Material angeordnet ist, die von wenigstens einem Halteelement (25) am Deckel (6) gehalten ist, und dass das Halteelement (25) durch Einwirken der definierten Zerstörungstemperatur oder durch Feuer zerstörbar ist, wodurch die Löschdecke (24) freigegeben ist und in den Innenraum (4) fällt.
